# EUROPEAN PATENT APPLICATION

(11) **EP 4 770 050 A2**
(43) Date of publication of application: **01.07.2026**
(21) Application number: 26176807.1
(22) Date of filing: 28.07.2021
(51) Int. Cl.: H04L 67/00

(54) **EXCHANGE OF CELL INFORMATION**

(30) Priority: 17.05.2021 US 202163189518 P
(62) Divisional of application: 21754771.0
(71) Applicant: Telefonaktiebolaget LM Ericsson (publ), 164 83 Stockholm (SE)
(72) Inventor: Degerfalk, Magnus, Linköping (SE); Johansson, Stefan, Linköping (SE); Johnander Faxén, Linnea, Linköping (SE); Henriksson, Daniel, Linköping (SE)
(74) Representative: Ericsson

(57) **Abstract**

A first network node that is a first Next Generation Node B, gNB, is described. The first network node includes processing circuitry configured to receive, from within the first network node, a first information indicative of an open systems interconnection, OSI, Layer 1, L1, configuration of at least two cells served by the first network node. The at least two cells are candidate cells. The processing circuitry is further configured to make a Wireless Device, WD, mobility decision by considering at least a performance gain of the candidate cells. The performance gain is determined based on the received first information indicative of the OSI L1 configuration. Methods, systems, and other apparatuses are also disclosed.

## Description

### TECHNICAL FIELD

The present disclosure relates to wireless communications, and in particular, to exchange of cell information.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, Radio Access Networks (RANs), such as a New Generation Radio Access Network (NG-RAN), broadband communication between network nodes, such as a Next Generation Node B (gNB), and mobile wireless devices (WD), as well as communication between network nodes and between WDs.

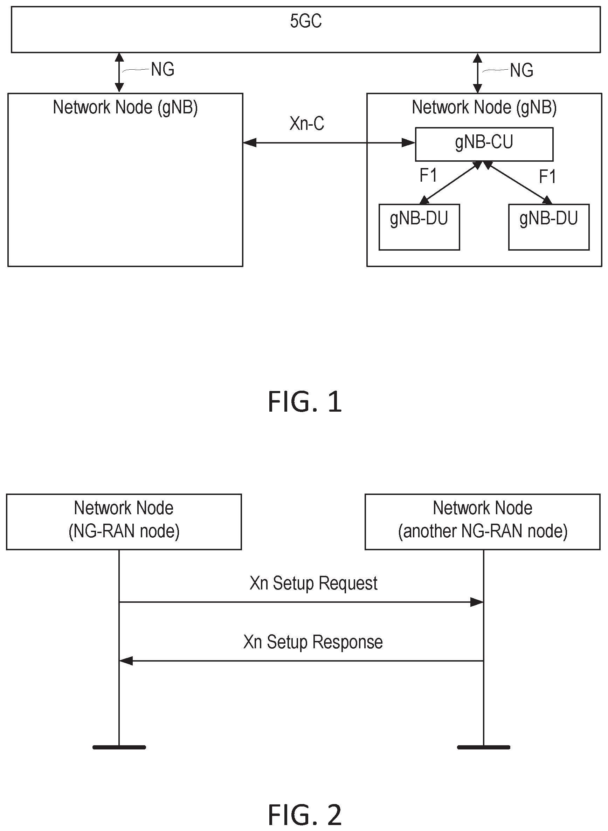

FIG. 1 shows an example of a typical NG-RAN overall architecture. The NG-RAN has a set of network nodes, e.g., gNBs, connected to the 5G Core Network (5GC) through an NG interface. A network node, e.g., gNB, can support a Frequency Division Duplex (FDD) mode, a Time Division Duplex (TDD) mode, or a dual mode operation. In addition, network nodes, e.g., gNBs, can be interconnected through an Xn interface.

A network node, e.g., gNB may include a gNB-Central Unit (gNB-CU) and one or more gNB-Distributed Units (gNB-DUs). A gNB-CU and a gNB-DU are connected via an F1 interface. One gNB-DU is connected to only one gNB-CU. NG, Xn, and F1 are logical interfaces.

For NG-RAN, the NG and Xn-C interfaces for a network node, e.g., gNB, including a gNB-CU and a gNB-DUs, terminate in the gNB-CU. For E-UTRAN New Radio - Dual Connectivity (EN-DC), the S1-U and X2-C interfaces for a network node, e.g., gNB including of a gNB-CU and gNB-DUs, terminate in the gNB-CU. The gNB-CU and connected gNB-DUs are only visible to other gNBs and the 5GC as a gNB.

3GPP Technical Specification (TS) 38.423 v16.4.0 describes arrangements for support to NG-RAN nodes to send information about own cells and receive information about its neighbor's cell over Xn. FIG. 2 shows an example of a typical Xn setup. A network node, e.g., NG-RAN node1, initiates the procedure by sending the Xn setup request message to a candidate network node, e.g., NG-RAN node2. The candidate network node, e.g., NG-RAN node2, replies with the Xn setup response message. A list of served cells NR Information Elements (IEs) and a list of served cells E-UTRA IEs, if contained in the Xn setup request message, contains a complete list of cells served by the network node, e.g., NG-RAN node1. The list of served cells NR IE and the list of served cells E-UTRA IE, if contained in the Xn setup response message, contains a complete list of cells served by the candidate network node, e.g., NG-RAN node2.

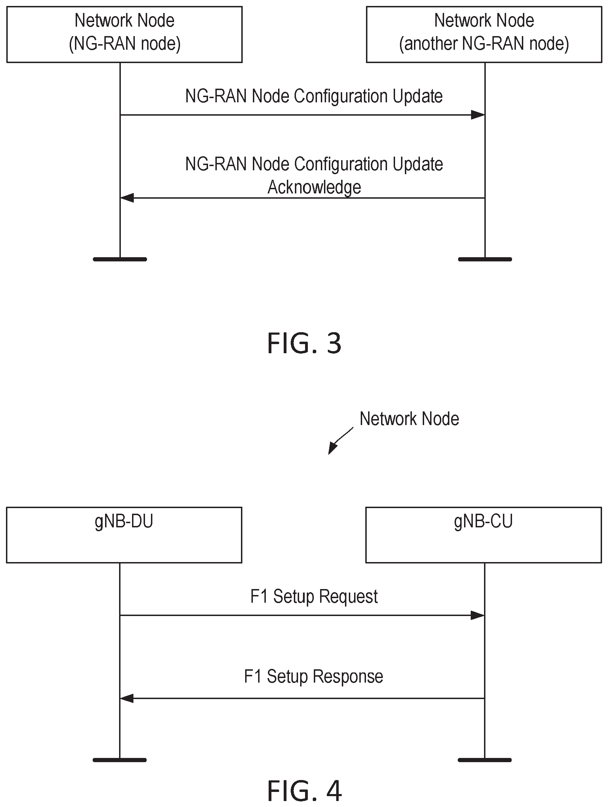

FIG. 3 shows an example of a typical NG-RAN node configuration update. A network node, e.g., NG-RAN node1, initiates the update by sending an NG-RAN node configuration update message to a peer network node, e.g., NG-RAN node2. More specifically, the update of served cell information NR is as follows.
- If Served Cells NR To Add IE is contained in the NG-RAN node configuration update message, the peer network node, e.g., NG-RAN node2, shall add cell information according to the information in the Served Cell Information NR IE;
- If Served Cells NR To Modify IE is contained in the NG-RAN node configuration update message, the peer network node, e.g., NG-RAN node2, shall modify information of cell indicated by Old NR Cell Global Identity IE (Old NR-CGI IE) according to the information in the Served Cell Information NR IE;
- When either served cell information or neighbor information of an existing served cell in NG-RAN node1 needs to be updated, the whole list of neighboring cells, if any, shall be contained in the Neighbor Information NR IE. The peer network node, e.g., NG-RAN node2, shall overwrite the served cell information and the whole list of neighbor cell information for the affected served cell; and
- If Served Cells NR To Delete IE is contained in the NG-RAN node configuration update message, the peer network node, e.g., NG-RAN node2, shall delete information of cell indicated by Old NR-CGI IE.

In addition, the list of served cells NR IE contains a list of served cell information NR IEs. The served cell information NR IE is included in the Xn setup, the Xn response, and the NG-RAN node configuration update and contains information about cells, such as NR CGI and supported bands. This information is distributed between NG-RAN nodes.

3GPP TS 38.473 v16.4.0 describes the F1 interface between gNB-CU and gNB-DU and F1 setup process. The purpose of the F1 setup process is to exchange application-level data needed for elements of a network node, e.g., gNB-DU and gNB-CU, to correctly interoperate on the F1 interface. The setup process shall be the first F1 Application Protocol (F1AP) process triggered for an F1-C interface instance after a Transport Network Layer (TNL) association has become operational. The process erases any existing application-level configuration data in the two network nodes and replaces the erased data with the one received. Also, the process re-initializes the F1AP WD-related contexts, if any, and erases all related signaling connections in the two network nodes, such as a reset procedure would do.

FIG. 4 shows an example of a typical F1 setup process. A gNB-DU of a network node initiates the setup process by sending an F1 setup request message including related data to a gNB-CU of the network node. The gNB-CU responds with a F1 setup response message also including related data. If the F1 setup request message contains a gNB-DU Served Cells List IE, the other network node, e.g., gNB-CU, takes the IE into account as specified in 3GPP TS 38.401 v16.4.0. The purpose of the gNB-DU configuration update procedure is to update application-level configuration data needed for the network node, e.g., for the gNB-DU and the gNB-CU, to interoperate the update on the F1 interface. This process does not affect existing WD-related contexts, if any., and uses non-WD associated signaling.

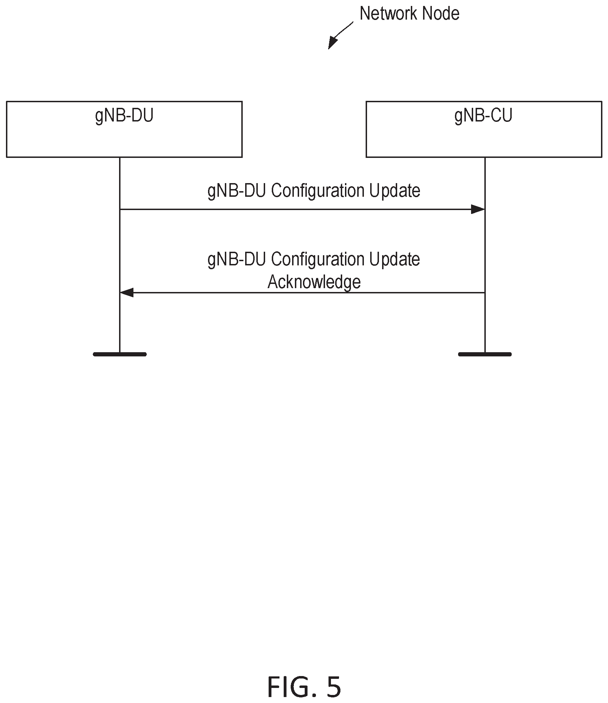

FIG. 5 shows an example gNB-DU configuration update process. A gNB-DU of a network node initiates the process by sending a gNB-DU configuration update message to a gNB-CU of the network node, including a set of updated configuration data that the network node has just made into operational use. The gNB-CU responds with a gNB-DU configuration update acknowledge message to acknowledge that the gNB-CU successfully updated the configuration data. If an information element is not included in the gNB-DU configuration update message, the gNB-CU interprets that the corresponding configuration data is not changed and continues to operate a corresponding F1-C interface with the existing related configuration data. In addition, the process includes the following:
- If Served Cells To Add Item IE is contained in the gNB-DU configuration update message, the gNB-CU of the network node adds cell information according to the information in the Served Cell Information IE. For NG-RAN, gNB-DU of the network node includes a gNB-DU System Information IE.
- If Served Cells To Modify Item IE is contained in the gNB-DU configuration update message, the gNB-CU of the network node modifies information of the cell indicated by Old NR CGI IE according to the information in the Served Cell Information IE and overwrites served cell information for the affected served cell. Further, if the gNB-DU System Information IE is present the gNB-CU of the network node shall store and replace any previous information received.
- If Served Cells To Delete Item IE is contained in the gNB-DU configuration update message, the gNB-CU of the network node deletes information of the cell indicated by Old NR CGI IE.

However, current cell information included in the Served Cell Information IE described in 3GPP TS 38.473 is not sufficient to estimate potential performance that could be achieved in a cell served by a network node, such as a Central Unit Control Panel (CU-CP). More specifically, Open Systems Interconnection (OSI) Layer 1 (L1) (referred to herein as Layer 1 or L1) cell configuration parameters are not included in current cell information distributed described by 3GPP TS 38.473. In other words, a CU-CP cannot make a comparison between cells. Therefore, support for certain features, such as mobility based on estimated performance gain, is limited.

In addition, current cell information included in Served Cell Information NR IE described in 3GPP TS 38.423 is not sufficient to estimate the potential performance that could be achieved in a cell served by another network node, such as a gNB. More specifically, Layer 1 (L1) cell configuration parameters are not included in current cell information distributed described by 3GPP TS 38.423. Therefore, cells served by the same gNB as a current PCell are difficult to compare with cells located on neighboring network nodes, such as neighboring gNBs.

Prior art solutions are described in following three documents: WO 2019/245304 A1 discloses a method and apparatus for performing conditional cell changes in wireless communication systems based on channel occupancy or congestion levels, particularly for operation in unlicensed spectrum bands. The system addresses challenges in 5G New Radio (NR) systems operating on unlicensed bands where traditional handover procedures may be inadequate due to high channel congestion and Listen-Before-Talk (LBT) requirements. The method involves the user equipment performing congestion level measurements on serving and/or target frequencies, receiving conditional mobility configuration from the serving node including congestion level thresholds and mobility commands for multiple target cells, and executing mobility to an optimal target cell based on both congestion measurements and signal quality criteria.

3GPP TR 37.816 discloses a study on RAN-centric data collection and utilization for both LTE and NR (5G New Radio) systems. The document examines various Self-Organizing Network (SON) functions and optimization techniques to improve network performance through automated data collection and analysis, including mobility optimization that extends LTE's Mobility Robustness Optimization (MRO) to NR, addressing connection failures due to mobility issues including too-late, too-early, and wrong-cell handovers with new features including beamlevel measurements and successful handover reporting for enhanced optimization.

US 2021/045031 A1 discloses a method and apparatus for performing conditional cell changes in wireless communication systems based on channel congestion levels, particularly for operations in unlicensed spectrum bands. The invention addresses limitations of existing conditional handover mechanisms that primarily consider cell quality metrics but do not account for congestion levels on unlicensed bands, enabling a wireless device to perform congestion level measurements and receive conditional mobility configuration from a serving node that includes thresholds for congestion levels along with information about multiple target cells.

### SUMMARY

Some embodiments advantageously provide methods, systems, and apparatuses for exchange of served cell information.

In some embodiments, cell configuration parameters are distributed. More specifically, Layer 1 (L1), e.g., physical layer, cell configuration parameters are distributed. In some other embodiments, a network node, e.g., a CU-CP or a CU, is made aware of L1 cell configuration parameters. The network node, e.g., the CU-CP, is made aware by a DU of the network node, by transmitting the L1 cell configuration parameters to the CU-CP. Making the network node, e.g., the CU-CP, aware of L1 cell configuration parameters can be used to estimate performance of different cells, e.g., located in the CU-CP, and compare cells, such as cells located in the same network node, e.g., the same gNB. In other words, distributing cell configuration parameters enables the use of mobility decisions based on performance gain, rather than just coverage within the same network node, e.g., the same gNB.

In some embodiments, a network node, e.g., a gNB, is made aware of cell configuration parameters, e.g., L1 cell configuration parameters. The cell configuration parameters may be from cells located on other network nodes, e.g., other gNBs. Making the network node, e.g., a gNB, aware of L1 cell configuration parameters can be used to estimate performance on cells located on one network node, e.g., a gNB1, from another network node, e.g., a gNB2, and compare them to cells located on the other network node, e.g., the gNB2. In sum, distributing cell information to the network nodes, e.g., gNBs, also enables use of mobility decisions based on performance gain, rather than just coverage to cells on other network nodes, e.g., other gNBs.

According to an aspect of the present disclosure, a first network node is described. The first network node is a first Next Generation Node B, gNB, and comprises processing circuitry configured to receive, from within the first network node, a first information indicative of an open systems interconnection, OSI, Layer 1, L1, configuration of at least two cells served by the first network node, where the at least two cells are candidate cells, and make a Wireless Device, WD, mobility decision by considering at least a performance gain of the candidate cells. The performance gain is determined based on the received first information indicative of the OSI L1 configuration.

In some embodiments, the performance gain of the candidate cells is further determined by one of determining the performance gain of each candidate cell relative to a source cell and determining the performance gain of one candidate cell of the candidate cells relative to another candidate cell of the candidate cells.

In some other embodiments, the first network node further comprises a first gNB Central Unit, gNB-CU, and a first plurality of gNB-Distributed Units, gNB-DUs, the first gNB-CU comprising a CU-Control Plane, CU-CP.

In an embodiment, the at least two candidate cells served by the first network node are served by at least one gNB-DU of the first plurality of gNB-DUs.

In another embodiment, the received first information indicative of the OSI L1 configuration is received at the CU-CP of the first network node.

In some embodiments, the received first information indicative of the OSI L1 configuration is received over an F1 interface.

In some other embodiments, the first network node further comprises a communication interface configured for communication with a second network node, where the second network node is a second gNB and comprises at least one gNB-Distributed Unit, gNB-DU. The communication interface is configured to receive from the second gNB a second information indicative of an OSI L1 configuration of at least one cell served by the at least one gNB-DU of the second gNB. The at least one cell served by the at least one gNB-DU of the second gNB is included in the candidate cells.

In an embodiment, the communication interface is an Xn interface.

In another embodiment, any one of the first information indicative of the OSI L1 configuration and the second information indicative of the OSI L1 configuration is associated with a 5G radio access technology network and includes at least any one of a bandwidth parameter, a layer parameter including supported Multiple Inputs Multiple Outputs, MIMO, layers, an order parameter including a supported modulation order, a subcarrier spacing, a subcarrier numerology, a duplex scheme, a number of Non-Zero Power, NZP, Channel State Information, CSI, Reference Signal, RS, Ports, and a number of Tracking Reference Signal, TRS, Resource sets.

In some embodiments, any one of the first information indicative of the OSI L1 configuration and the second information indicative of the OSI L1 configuration is included in an information element, the information element being a Served Cell Information New Radio, NR, Information Element, IE, included in any one of an Xn setup request, an Xn setup response, an New Generation Radio Access Network, NG-RAN, node configuration update, and an NG-RAN node configuration update acknowledgement.

In some other embodiments, making the mobility decision comprises selecting at least one candidate cell and includes making a capability aware Primary Cell, PCell, selection that is used at least in part to any one of compare a combination of PCells and Secondary Cells, SCells, change a PCell to one of the first network node and the second network node, and add an SCell to one of the first network node the second network node.

In an embodiment, making the WD mobility decision includes any one of triggering a Hand Over, HO, to one of the candidate cells and a cell re-selection of one of the candidate cells.

In another aspect of the present disclosure, a method implemented in a first network node is described. The first network node is a first Next Generation Node B, gNB. The method includes receiving, from within the first network node, a first information indicative of an open systems interconnection, OSI, Layer 1, L1, configuration of at least two cells served by the first network node, where the at least two cells are candidate cells, and making a Wireless Device, WD, mobility decision by taking into account at least a performance gain of the candidate cells. The performance gain is determined based on the received first information indicative of the OSI L1 configuration.

In some embodiments, the performance gain of the candidate cells is further determined by one of determining the performance gain of each candidate cell relative to a source cell and determining the performance gain of one candidate cell of the candidate cells relative to another candidate cell of the candidate cells.

In some other embodiments, the first network node further comprises a first gNB Central Unit, gNB-CU, and a first plurality of gNB-Distributed Units, gNB-DUs, the first gNB-CU comprising a CU-Control Plane, CU-CP.

In an embodiment, the at least two candidate cells served by the first network node are served by at least one gNB-DU of the first plurality of gNB-DUs.

In another embodiment, the received first information indicative of the OSI L1 configuration is received at the CU-CP of the first network node.

In some embodiments, the received first information indicative of the OSI L1 configuration is received over an F1 interface.

In some other embodiments, the first network node further comprises a communication interface configured for communication with a second network node, where the second network node is a second gNB and comprises at least one gNB-Distributed Unit, gNB-DU. The method further includes receiving from the second gNB a second information indicative of an OSI L1 configuration of at least one cell served by the at least one gNB-DU of the second gNB. The at least one cell served by the at least one gNB-DU of the second gNB is included in the candidate cells.

In an embodiment, the communication interface is an Xn interface.

In another embodiment, any one of the first information indicative of the OSI L1 configuration and the second information indicative of the OSI L1 configuration is associated with a 5G radio access technology network and includes at least any one of a bandwidth parameter, a layer parameter including supported Multiple Inputs Multiple Outputs, MIMO, layers, an order parameter including a supported modulation order, a subcarrier spacing, a subcarrier numerology, a duplex scheme, a number of Non-Zero Power, NZP, Channel State Information, CSI, Reference Signal, RS, Ports, and a number of Tracking Reference Signal, TRS, Resource sets.

In some embodiments, any one of the first information indicative of the OSI L1 configuration and the second information indicative of the OSI L1 configuration is included in an information element, the information element being a Served Cell Information New Radio, NR, Information Element, IE, included in any one of an Xn setup request, an Xn setup response, an New Generation Radio Access Network, NG-RAN, node configuration update, and an NG-RAN node configuration update acknowledgement.

In some other embodiments, making the mobility decision comprises selecting at least one candidate cell and includes making a capability aware Primary Cell, PCell, selection that is used at least in part to any one of compare a combination of PCells and Secondary Cells, SCells, change a PCell to one of the first network node and the second network node, and add an SCell to one of the first network node the second network node.

In an embodiment, making the WD mobility decision includes any one of triggering a Hand Over, HO, to one of the candidate cells and a cell re-selection of one of the candidate cells.

According to one other aspect, a first network node is described. The first network node is a first Next Generation Node B, gNB. The first network node (16) is adapted to receive, from within the first network node, a first information indicative of an open systems interconnection, OSI, Layer 1, L1, configuration of at least two cells served by the first network node, where the at least two cells are candidate cells, and make a Wireless Device, WD, mobility decision by considering at least a performance gain of the candidate cells. The performance gain is determined based on the received first information indicative of the OSI L1 configuration.

In some embodiments, the performance gain of the candidate cells is further determined by one of determining the performance gain of each candidate cell relative to a source cell and determining the performance gain of one candidate cell of the candidate cells relative to another candidate cell of the candidate cells.

In some other embodiments, the first network node further comprises a first gNB Central Unit, gNB-CU, and a first plurality of gNB-Distributed Units, gNB-DUs, the first gNB-CU comprising a CU-Control Plane, CU-CP.

In an embodiment, the at least two candidate cells served by the first network node are served by at least one gNB-DU of the first plurality of gNB-DUs.

In another embodiment, the received first information indicative of the OSI L1 configuration is received at the CU-CP of the first network node.

In some embodiments, the received first information indicative of the OSI L1 configuration is received over an F1 interface.

In some other embodiments, the first network node is adapted to communicate with a second network node, where the second network node is a second gNB and comprises at least one gNB-Distributed Unit, gNB-DU. The first network node (16) is further adapted to receive from the second gNB a second information indicative of an OSI L1 configuration of at least one cell served by the at least one gNB-DU of the second gNB. The at least one cell served by the at least one gNB-DU of the second gNB is included in the candidate cells.

In an embodiment, the first network node includes a communication interface that is an Xn interface and is adapted to receive the second information.

In another embodiment, any one of the first information indicative of the OSI L1 configuration and the second information indicative of the OSI L1 configuration is associated with a 5G radio access technology network and includes at least any one of a bandwidth parameter, a layer parameter including supported Multiple Inputs Multiple Outputs, MIMO, layers, an order parameter including a supported modulation order, a subcarrier spacing, a subcarrier numerology, a duplex scheme, a number of Non-Zero Power, NZP, Channel State Information, CSI, Reference Signal, RS, Ports, and a number of Tracking Reference Signal, TRS, Resource sets.

In some embodiments, any one of the first information indicative of the OSI L1 configuration and the second information indicative of the OSI L1 configuration is included in an information element, the information element being a Served Cell Information New Radio, NR, Information Element, IE, included in any one of an Xn setup request, an Xn setup response, an New Generation Radio Access Network, NG-RAN, node configuration update, and an NG-RAN node configuration update acknowledgement.

In some other embodiments, making the mobility decision comprises selecting at least one candidate cell and includes making a capability aware Primary Cell, PCell, selection that is used at least in part to any one of compare a combination of PCells and Secondary Cells, SCells, change a PCell to one of the first network node and the second network node, and add an SCell to one of the first network node the second network node.

In an embodiment, making the WD mobility decision includes any one of triggering a Hand Over, HO, to one of the candidate cells and a cell re-selection of one of the candidate cells.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is an example of a typical NG-RAN overall architecture;
FIG. 2 shows an example of a typical Xn setup;
FIG. 3 shows an example of a typical NG-RAN node configuration update;
FIG. 4 shows an example of a typical F1 setup process;
FIG. 5 shows an example gNB-DU configuration update process;
FIG. 6 is a schematic diagram of an example network architecture illustrating a communication system connected via an intermediate network to a host computer according to the principles in the present disclosure;
FIG. 7 is a block diagram of a host computer communicating via a network node with a wireless device over an at least partially wireless connection according to some embodiments of the present disclosure;
FIG. 8 is a flowchart illustrating example methods implemented in a communication system including a host computer, a network node and a wireless device for executing a client application at a wireless device according to some embodiments of the present disclosure;
FIG. 9 is a flowchart illustrating example methods implemented in a communication system including a host computer, a network node and a wireless device for receiving user data at a wireless device according to some embodiments of the present disclosure;
FIG. 10 is a flowchart illustrating example methods implemented in a communication system including a host computer, a network node and a wireless device for receiving user data from the wireless device at a host computer according to some embodiments of the present disclosure;
FIG. 11 is a flowchart illustrating example methods implemented in a communication system including a host computer, a network node and a wireless device for receiving user data at a host computer according to some embodiments of the present disclosure;
FIG. 12 is a flowchart of an example process in a network node for collecting and distributing cell configuration parameters according to some embodiments of the present disclosure;
FIG. 13 is a flowchart of an example process in a network node for making a WD mobility decision according to some embodiments of the present disclosure;
FIG. 14 is a flowchart of another example process in a network node for making a WD mobility decision according to some embodiments of the present disclosure;
FIG. 15 is example exchange of cell information within a network node and between the network node and another network node according to some embodiments of the present disclosure;
FIG. 16 is an example process of exchange of cell information between a DU of a network node and a CU-CP of the network node according to some embodiments of the present disclosure; and
FIG. 17 is an example process of exchange of cell information between a gNB network node and another gNB network node according to some embodiments of the present disclosure.

### DETAILED DESCRIPTION

Before describing in detail exemplary embodiments, it is noted that the embodiments reside primarily in combinations of apparatus components and processing steps related to exchange of served cell information. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the network node corresponds to a logical gNB that includes a CU (e.g., gNB-CU, gNB-CU-CP) and at least one DU (e.g., gNB-DU). Although the CU and the DU are described as included in the network node, the CU and the DU may refer to network nodes, respectively, and may be within another network node or standalone.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide to exchange of served cell information. More specifically, L1 cell configuration parameters are collected from at least a network node and distributed to at least another network node.

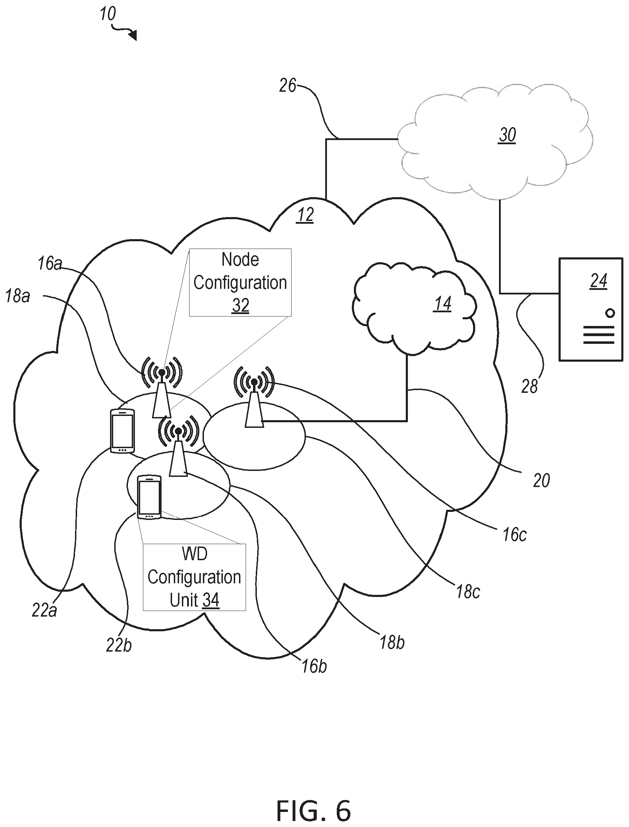

Referring again to the drawing figures, in which like elements are referred to by like reference numerals, there is shown in FIG. 6 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). However, each network node is not limited to defining only one coverage area 18 and may define/service more than one coverage area 18. A coverage area 18 may refer to a cell, e.g., a geographical cell and/or a logical cell, that may be associated with the coverage area 18 and/or a network node 16. In a nonlimiting example, a cell may include a source cell, a target cell, a candidate cell, a Primary Cell (PCell), a secondary Cell (SCell), but is not limited to such cells and may be any other kind of cell. Each network node 16 may service/correspond to more than one cell. Candidate cells and target cells may be used interchangeably herein. For example, in a handover may be performed from a source cell to a candidate cell, i.e., a target cell.

Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16. In addition, network node 16 may be and/or include any one of a gNB, CU, CU-CP, gNB-CU, gNB-CU-CP, DU, gNB-DU, and any other type of node. A CU-CP may be a control plane function of a gNB-CU. Further, a gNB may be described as gNB1. Likewise, a second gNB may be described as a gNB2. Similar numbering schemes may be used to describe other network nodes, e.g., CU, CU-CP, gNB-CU, gNB-CU-CP, DU, gNB-DU.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more subnetworks (not shown).

The communication system of FIG. 6 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a node configuration unit 32 which is configured to collect and distribute cell configuration parameters. A wireless device 22 is configured to include a WD configuration unit 34 which is configured to collect and distribute cell configuration parameters.

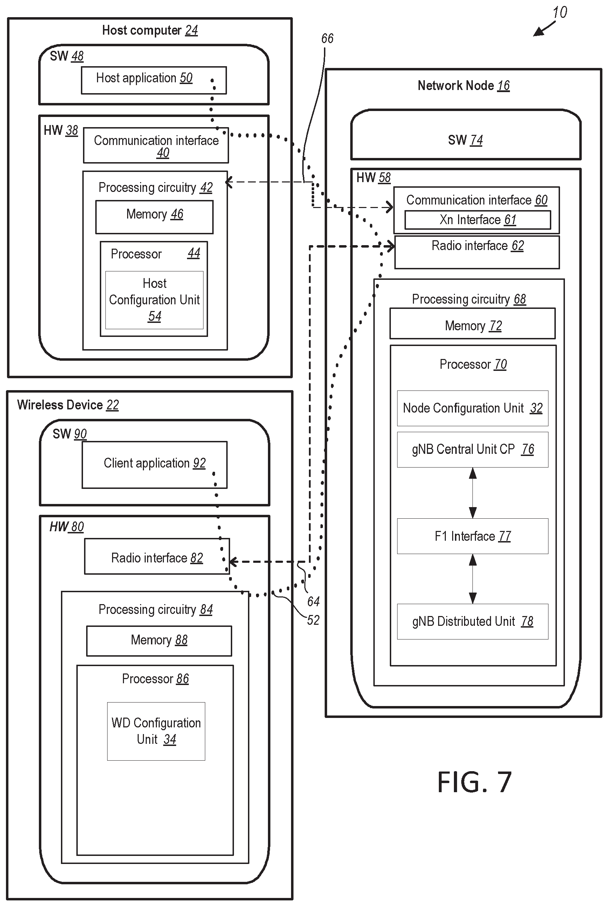

Example implementations, in accordance with an embodiment, of the WD 22, network node 16 and host computer 24 discussed in the preceding paragraphs will now be described with reference to FIG. 7. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22. The processing circuitry 42 of the host computer 24 may include a host configuration unit 54 configured to enable the service provider to observe/monitor/control/transmit to/receive from the network node 16 and or the wireless device 22 in accordance with the collection and distribution of cell configuration parameters.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device, e.g., with another network node 16, of the communication system 10, as well as a radio interface 62 for setting up and maintaining at least a wireless connection 64 with a WD 22 located in a coverage area 18 served by the network node 16. Communication interface 60 may be or include an Xn interface 61 that may configured to communicate with a different communication device, e.g., with another network node 16 and/or any components/elements of the other network node 16. Xn interface 61 may refer to an Xn-C interface and/or an Xn-U interface. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Further, processing circuitry 68 may include a gNB Central Unit Control Plane (gNB-CU-CP) 76, an F1 interface 77, and a gNB Distributed Unit (gNB DU) 78. Each gNB-CU-CP 76 may refer to more than one gNB-CU-CP 76, such as gNB-CU-CP 76a, gNB-CU-CP 76b, gNB-CU-CP 76c, or more, which may collectively be referred to as gNB-CU-CP 76. Similarly, F1 interface 77 may refer to more than one F1 interface 77, such as F1 interface 77a, F1 interface 77b, F1 interface 77c, or more, which may collectively be referred to as F1 interface 77. F1 interface 77 may also refer to an F1-C interface and/or an F1-U interface. In addition, gNB-DU 78 may refer to more than one gNB-DU 78, such as gNB DU-78a, gNB-DU 78b, gNB-DU 78c, or more, which may collectively be referred to as gNB DU-78. gNB-CU-CP 76 and gNB-DU 78 are not limited to being associated with a gNB node and may be any kind of CU-CP and DU, respectively. Further, gNB-CU-CP 76 is not limited to being associated with a control plane and may be any kind of CU.

A gNB-CU-CP 76 may be configured to receive L1 cell information such as configuration parameters (e.g., from a gNB-DU 78 via an F1 interface 77 such as an F1-C interface). The L1 cell information may be used to estimate performance of coverage areas 18 (e.g., cells served by one or more gNB-DU 78) and/or to compare performance associated with each coverage area 18. Similarly, each gNB-DU 78 may be configured report/transmit L1 cell information such as configuration parameters (e.g., via the F1 interface 77 such as the F1-C interface) to the gNB-CU-CP 76. Thus, the F1 interface 77 such as the F1-C interface may be configured as a logical interface and/or to receive and/or transmit L1 cell configuration parameters, e.g., between the gNB-CU-CP 76 and the gNB-DU 78.

In addition, Xn interface 61, e.g., Xn-C interface, may communicate with another network node 16, e.g., a gNB, by transmitting and/or receiving L1 cell information, e.g., L1 cell configuration parameters, that may be associated with a coverage area 18, e.g., a cell, served by a gNB-DU 78. More specifically, the Xn interface 61 of the network node 16 may be configured to receive L1 cell information from the other network node 16, where the L1 cell information may have been transmitted by a gNB-DU 78 of the other network node 16 to the gNB-CU-CP 76 of the other network node 16, via the F1 interface 77 (e.g., F1-C interface) of the other network node 16. Similarly, the Xn interface 61 may be configured to transmit L1 cell information to the other network node 16, where the L1 cell information may have been transmitted by the gNB-DU 78 of the network node 16 to the gNB-CU-CP 76 of the network node 16, via the F1 interface 77 of the network node 16. The Xn interface 61, e.g., Xn-C interface, may communicate directly at least with a gNB-CU-CP 76. Although Xn interface 61 is shown within communication interface 60, Xn interface is not limited to being within the communication interface and may be part of hardware 58 and/or software 74 and/or any of the components of hardware 58 and/or software 74. In addition, Xn interface 61, e.g., Xn-C interface, may be in communication with processing circuitry 68, and/or processing circuitry 68 may cause Xn interface 61 to perform any of the functions and processes described herein.

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include node configuration unit 32 configured to collect and distribute cell configuration parameters.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a WD configuration unit 34 configured to collect and distribute cell configuration parameters.

In some embodiments, the inner workings of the network node 16, WD 22, and host computer 24 may be as shown in FIG. 7 and independently, the surrounding network topology may be that of FIG. 6.

In FIG. 7, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 6 and 7 show various "units" such as node configuration unit 32, and WD configuration unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

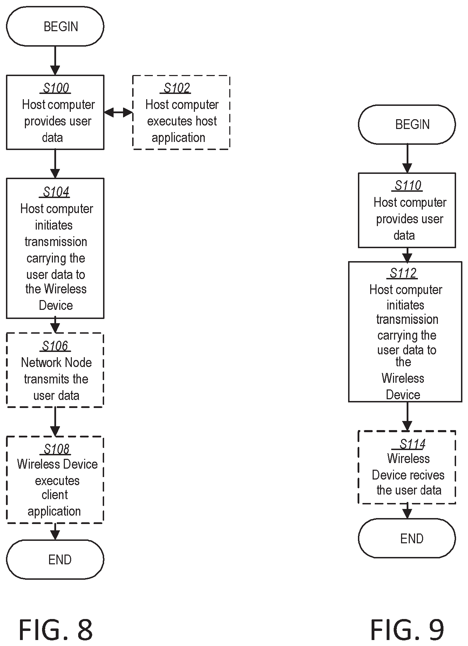

FIG. 8 is a flowchart illustrating an example method implemented in a communication system, such as, for example, the communication system of FIGS. 6 and 7, in accordance with one embodiment. The communication system may include a host computer 24, a network node 16 and a WD 22, which may be those described with reference to FIG. 7. In a first step of the method, the host computer 24 provides user data (Block S100). In an optional substep of the first step, the host computer 24 provides the user data by executing a host application, such as, for example, the host application 50 (Block S 102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 9 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

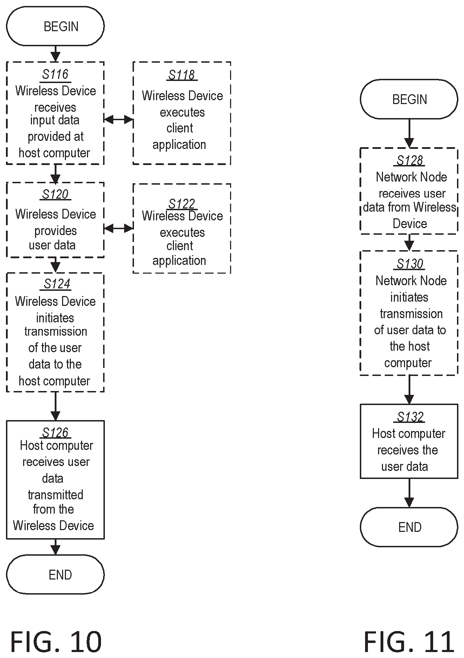

FIG. 10 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 11 is a flowchart illustrating an example method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

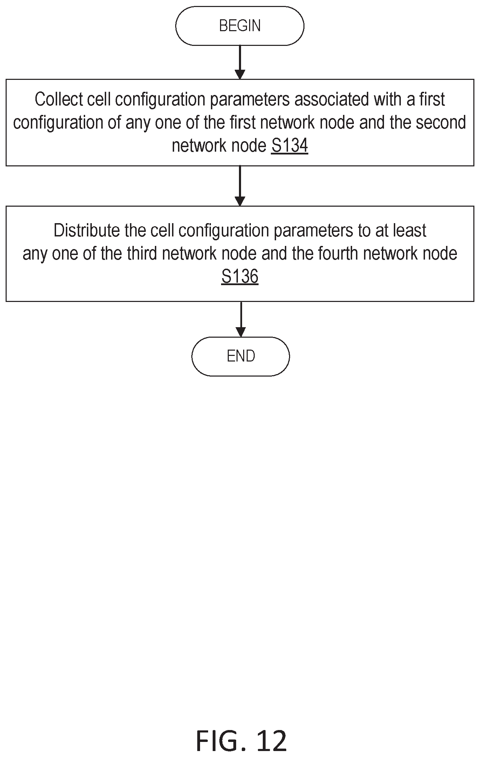

FIG. 12 is a flowchart of an example process in a network node 16, e.g., a first network node, for collecting and distributing cell configuration parameters. One or more blocks described herein may be performed by one or more elements of network node 16 such as by one or more of processing circuitry 68 (including the network node configuration unit 32), processor 70, radio interface 62 and/or communication interface 60. Network node 16 such as via processing circuitry 68 and/or processor 70 and/or radio interface 62 and/or communication interface 60 is configured to collect (Block S134) cell configuration parameters associated with a first configuration of any one of the first network node and the second network node and distribute (Block S136) the cell configuration parameters to at least any one of the third network node and the fourth network node.

In some embodiments, the first configuration includes anyone of an F1 setup request received by the first network node, an F1 setup response transmitted by the first network node, a gNB-DU configuration update received by the first network node, and a gNB-DU configuration acknowledgment transmitted by the first network node.

In some other embodiments, distributing the cell configuration parameters includes updating with the cell configuration parameters a second group of information elements used in a second configuration of any one of the third network node and the fourth network node.

In one embodiment, the second configuration includes anyone of an Xn setup request received by the third network node, an Xn setup response transmitted by the third network node, an NG-RAN node configuration update received by the third network node, and an NG-RAN node configuration update acknowledgment transmitted by the third network node.

In another embodiment, the cell configuration parameters are Layer 1 (L1) cell configuration parameters, where the L1 cell configuration parameters are at least any one of a bandwidth parameter, a layer parameter including supported Multiple Inputs Multiple Outputs (MIMO) layers, an order parameter including a supported modulation order, a subcarrier spacing, a subcarrier numerology, and a duplex scheme.

In some embodiments, the cell configuration parameters are further associated with a radio access technology network, the radio access technology network being a 5G NR network.

In some other embodiments, the first network node is any one of a Central Unit (CU) node and a Central Unit Control Plane (CU-CP) node, the second network node is Distributed Unit (DU) node, the third node is one NG-RAN node, and the fourth network node is another NG-RAN node.

In an embodiment, the first network node and/or the radio interface and/or the processing circuitry is further configured to estimate a performance metric of a group of cells associated with any one of the first network node the second network node and compare another performance metric of another group of cells associated with any one of the third and fourth network nodes.

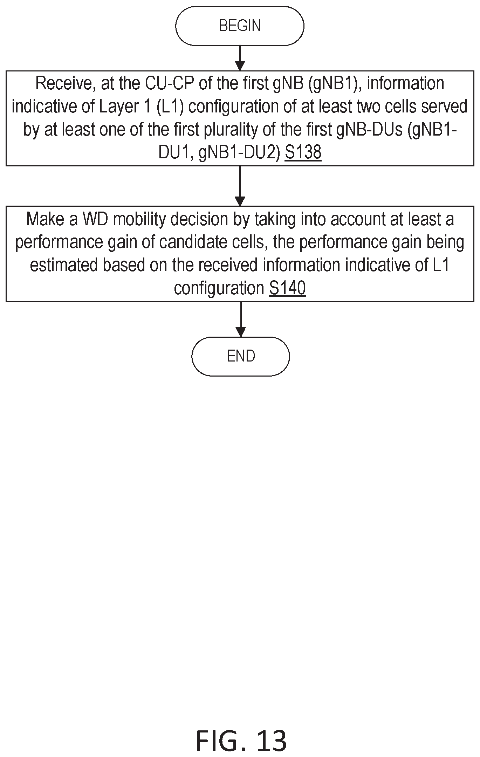

FIG. 13 is a flowchart of an example process in a network node 16, e.g., a first gNB, for making (i.e., performing) a WD mobility decision. One or more blocks described herein may be performed by one or more elements of network node 16 such as by one or more of processing circuitry 68 (including the network node configuration unit 32), processor 70, radio interface 62 and/or communication interface 60. Network node 16 such as via processing circuitry 68 and/or processor 70 and/or radio interface 62 and/or communication interface 60 is configured to receive (Block S138), at the CU-CP of the first gNB (gNB1), information indicative of Layer 1 (L1) configuration of at least two cells served by at least one of the first plurality of the first gNB-DUs (gNB1-DU1, gNB1-DU2) and a second network node and make (Block S140) a WD mobility decision by taking into account at least a performance gain of candidate cells, where the performance gain is estimated based on the received information indicative of L1 configuration.

In some embodiments, the first gNB (gNB1) and/or the radio interface 62 and/or the communication interface 60 and/or processing circuitry 68 is further configured to receive, at the first gNB (gNB1) from a second gNB (gNB2), information indicative of Layer 1 (L1) configuration of at least one cell served by at least one gNB-DU (gNB2-DU1) of the second gNB (gNB2).

In some other embodiments, the information indicative of L1 configuration of the at least two cells served by at least one of the first plurality of the first gNB-DUs (gNB1-DU1, gNB1-DU2) is received over an F1 interface.

In one embodiment, the information indicative of Layer 1 (L1) configuration of the at least one cell served by at least one of the second plurality of the second gNB-DUs (gNB2-DU1, gNB2-DU2) of the second gNB (gNB2) is received over an Xn interface.

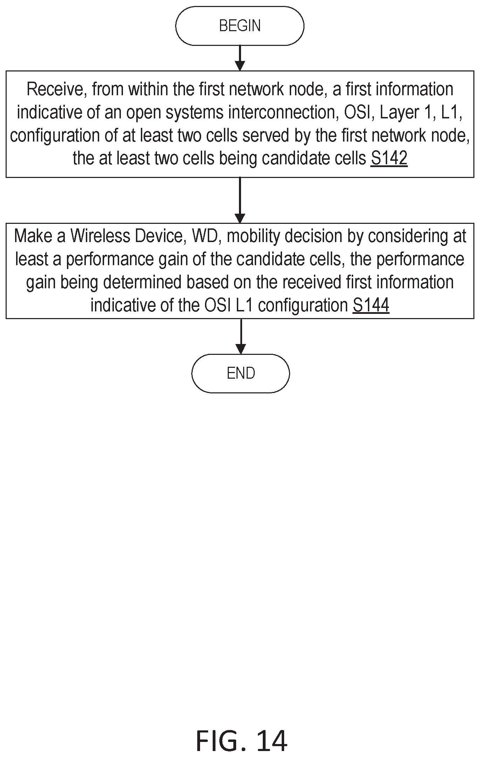

FIG. 14 is a flowchart of another example process in a network node 16, e.g., a first network node 16, for making (i.e., performing) a WD mobility decision. One or more blocks described herein may be performed by one or more elements of network node 16 such as by one or more of processing circuitry 68 (including the network node configuration unit 32), processor 70, radio interface 62 and/or communication interface 60 and/or Xn interface 61 and/or gNB-CU-CP 76 and/or F1 interface 77 and/or gNB-DU 78. Network node 16 such as via processing circuitry 68 and/or processor 70 and/or gNB-CU-CP 76 and/or F1 interface 77 and/or gNB-DU 78 is configured to receive (Block S 142), from within the first network node 16a, a first information indicative of an open systems interconnection, OSI, Layer 1, L1, configuration of at least two cells served by the first network node 16, where the at least two cells are candidate cells. Further, network node 16 such as via processing circuitry 68 and/or processor 70 and/or any other component of network node 16 is configured to make (Block S144) a Wireless Device, WD, mobility decision by considering at least a performance gain of the candidate cells. The performance gain is determined based on the received first information indicative of the OSI L1 configuration.

In some embodiments, the performance gain of the candidate cells is further determined by one of determining the performance gain of each candidate cell relative to a source cell and determining the performance gain of one candidate cell of the candidate cells relative to another candidate cell of the candidate cells.

In some other embodiments, the first network node 16 further comprises a first gNB Central Unit, gNB-CU, 76 and a first plurality of gNB-Distributed Units, gNB-DUs, 78 the first gNB-CU 76 comprising a CU-Control Plane, CU-CP.

In an embodiment, the at least two candidate cells served by the first network node 16 are served by at least one gNB-DU of the first plurality of gNB-DUs 78.

In another embodiment, the received first information indicative of the OSI L1 configuration is received at the CU-CP of the first network node 16.

In some embodiments, the received first information indicative of the OSI L1 configuration is received over an F1 interface 77.

In some other embodiments, the first network node 16 further comprises a communication interface 60 configured for communication with a second network node 16, where the second network node 16 is a second gNB and comprises at least one gNB-Distributed Unit, gNB-DU, 78. The communication interface 60 is configured to receive from the second gNB a second information indicative of an OSI L1 configuration of at least one cell served by the at least one gNB-DU 78 of the second gNB. The at least one cell served by the at least one gNB-DU of the second gNB is included in the candidate cells.

In an embodiment, the communication interface 60 is an Xn interface 61.

In another embodiment, any one of the first information indicative of the OSI L1 configuration and the second information indicative of the OSI L1 configuration is associated with a 5G radio access technology network and includes at least any one of a bandwidth parameter, a layer parameter including supported Multiple Inputs Multiple Outputs, MIMO, layers, an order parameter including a supported modulation order, a subcarrier spacing, a subcarrier numerology, a duplex scheme, a number of Non-Zero Power, NZP, Channel State Information, CSI, Reference Signal, RS, Ports, and a number of Tracking Reference Signal, TRS, Resource sets.

In some embodiments, any one of the first information indicative of the OSI L1 configuration and the second information indicative of the OSI L1 configuration is included in an information element, the information element being a Served Cell Information New Radio, NR, Information Element, IE, included in any one of an Xn setup request, an Xn setup response, an New Generation Radio Access Network, NG-RAN, node configuration update, and an NG-RAN node configuration update acknowledgement.

In some other embodiments, making the mobility decision comprises selecting at least one candidate cell and includes making a capability aware Primary Cell, PCell, selection that is used at least in part to any one of compare a combination of PCells and Secondary Cells, SCells, change a PCell to one of the first network node 16 and the second network node 16, and add an SCell to one of the first network node 16 the second network node 16.

In an embodiment, making the WD mobility decision includes any one of triggering a Hand Over, HO, to one of the candidate cells and a cell re-selection of one of the candidate cells.

Having described the general process flow of arrangements of the disclosure and having provided examples of hardware and software arrangements for implementing the processes and functions of the disclosure, the sections below provide details and examples of arrangements for exchange of served cell information.

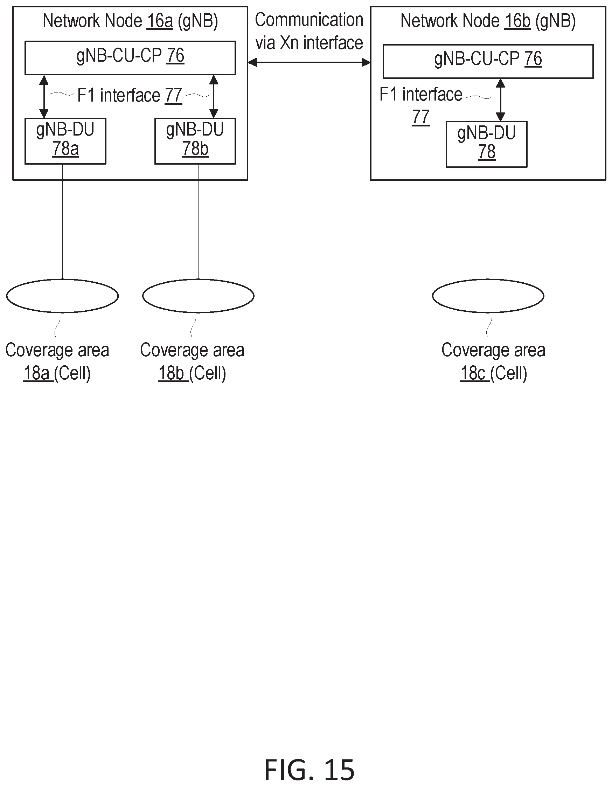

Some embodiments provide exchanging cell information, e.g., L1 cell configuration parameters, between network nodes and/or at least within a network node. FIG. 15 shows an example process of exchange of cell information between two network nodes 16 and within one of the two network nodes 16. In this nonlimiting example, the first network node 16a, e.g., a gNB, includes a gNB-CU-CP 76, a first gNB-DU 78a and a second gNB-DU 78b. Both gNB-DUs 78a, 78b of the first network node 16a are in communication with the gNB-CU-CP 76 of the first network node 16a via F1 interface 77. The F1 interface 77 may refer to more than one interface, e.g., an F1 interface 77a for communication corresponding to gNB-DU 78a and another F1 interface 77b for communication corresponding to gNB-DU 78b. The first network node 16a corresponds to and/or serves two coverage areas 18a, 18b, such as cells. In this nonlimiting example, coverage area 18a, e.g., a first cell, is served by gNB-DU 78a of the first network node 16a, while coverage area 18b, e.g., a second cell, is served by gNB-DU 78b of the first network node 16a.

The second network node 16b includes a gNB-CU-CP 76 and a gNB-DU 78, both in communication via an F 1interface 77. The second network node 16b corresponds to and/or serves a coverage area 18c, such as a third cell. In this nonlimiting example, coverage area 18c, e.g., the third cell, is served by gNB-DU 78 of the second network node 16b.

Both first and second network nodes 16a and 16b are configured to communicate via an Xn interface such as an Xn-C interface but may be configured to communicate via any other kind of interface. In addition, the F1 interface 77 of network nodes 16a and 16b is an F1-C interface but is not limited to being an F1-C interface and may be any kind of interface.

In this nonlimiting example, the first network node 16a may receive, from within the first network node 16a, a first information indicative of an OSI, L1, configuration of the first and second coverage areas 18a and 18b, e.g., the first and second cells which are candidate cells. The first information is received via the F1 interface 77. Similarly, the second network node 16b may receive, from within the second network node 16b, a second information indicative of an OSI, L1, configuration of the third coverage area 18c, e.g., the third cell which is also a candidate cell.

The first network node 16 may also receive, via an Xn interface such as an Xn-C interface, from the second network node 16b the second information indicative of an OSI L1 configuration of the third cell. Further, the first network node 16a may make a Wireless Device, WD, mobility decision by considering at least a performance gain of the coverage areas 18a, 18b, 18c, e.g., the candidate cells. The performance gain may be determined, e.g., by estimation, based on the received first and/or second information indicative of the OSI L1 configuration.

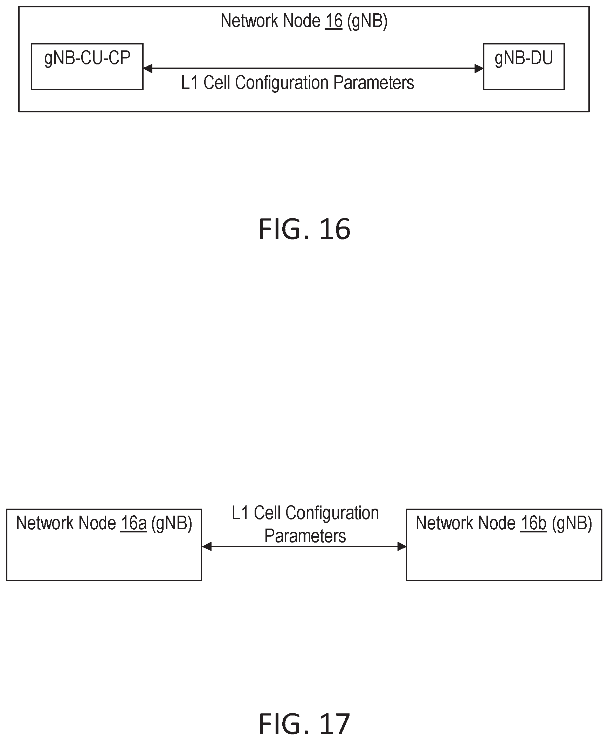

Some other embodiments provide receiving L1 cell configuration parameters within a network node 16, such as by a gNB-CU-CP 76 of the network node 16, from a gNB-DU 78 of the network node 16. The gNB-DU 78 may also receive L1 cell configuration parameters from the gNB-CU-CP 76. L1 cell configuration parameters include Multiple Inputs Multiple Outputs (MIMO) layers, cell bandwidth, modulation support, a subcarrier spacing, a subcarrier numerology, and a duplex scheme. Further, L1 cell configuration parameters may also include a number of Non-Zero Power (NZP) Channel State Information (CSI) Reference Signal (RS) Ports and/or a number of Tracking Reference Signal (TRS) Resource sets. L1 cell configuration parameters are used to estimate/determine an L1 data rate. The L1 data rate may be determined based on a formula to determine a peak data rate, e.g., the peak data rate described in 3GPP wireless communication standards such as 3GPP TS 38.306 v16.3.0, section 4.1.2. Exchange of L1 cell configuration parameters, e.g., receiving the parameters at a CU-CP, allows estimating performance of a cell. At least network node 16 may take actions based on the estimated performance of the cell. The example process of exchange of cell information within a network node 16, e.g., exchange of cell information between a gNB-DU 78 and a gNB-CU-CP 76, is shown in FIG. 16. The exchange of cell information, e.g., L.1 cell configuration parameters, may be exchanged via an F 1interface 77 such as an F1-C interface.

L1 cell configuration parameters may be added to a Served Cell Information IE. The Served Cell Information IE may be already present in a message/signal, e.g., any one of an F1 setup request, an F1 setup response, a gNB-DU configuration update, and a gNB-DU configuration update acknowledgment. L1 cell configuration parameters may be added to any other IE and/or the IE may be present in any other type of message.

FIG. 17 is an example process of exchange of cell information, e.g., via an Xn interface 61 such as an Xn-C interface, between two network nodes 16 such as a network node 16a (e.g., an gNB) and another network node 16b (e.g., another gNB). More specifically, a network node 16a, e.g., an gNB, may receive L1 cell configuration parameters from another network node 16b, another gNB. The exchange of cell information can also be performed in the opposite direction, i.e., the other network node 16b, e.g., the other gNB, receives L1 cell configuration parameters from the network node 16a, e.g., the gNB. From a network node 16, e.g., the network node 16a, L1 cell configuration parameters may be used to estimate performance of cells located on the other network node 16b, e.g., the other gNB.

L1 cell configuration parameters may be added to Served Cell Information NR IE. The Served Cell Information NR IE may be already included in a message/signal, e.g., any one of an Xn Setup Request, an Xn Setup Response, an NG-RAN node configuration update, and an NG-RAN node configuration update acknowledgement. L1 cell configuration parameters may be added to any other IE and/or the IE may be present in any other type of message.

In some embodiments, a CU has cell-relations to several cells, and a DU controls one or more cells. In addition, several DUs may be connected to one CU. A specific cell may be associated with one DU and/or connected to one CU. In some other embodiments, at least a cell is selected from a group of NG-RAN network nodes. At least one cell, e.g., a set of cells, is determined to have best performance compared with the remaining cells.

In one embodiment, a gNB may be a logical node that may have a split architecture with one Central Unit (gNB-CU) and a plurality of Distributed Units (gNB-DUs). L1 information for cells served may be exchanged by gNB-DUs of a same gNB. For example, gNB-DUs communicate with the same gNB-CU over an F1 interface, such as an F1 Control Plane, F1-C, interface. In other words, the CU-CP of a first gNB1 receiving information indicative of L1 configuration, e.g., via an F1-C interface, and the first gNB1 making a WD mobility decision may happen within a single gNB.

In another embodiment, in a "minimal" configuration the L1 information is used to enhance mobility decisions within a single gNB, e.g., which may allow this solution to co-exist with legacy gNBs that do not share the same L1 information with other gNBs. If handover/cell re-selection is to be made to a candidate cell within the same gNB, the selection of the candidate handover/cell re-selection may be enhanced by the estimated performance gain. If the handover/cell re-selection is to be made to a candidate cell for which the L1 information has not been received or made available, the mobility decision may be made based on another process, e.g., a legacy process.

In some other embodiments, exchange of L1 information between gNBs may assume that a second gNB implements the exchange of cell information, e.g., L1 cell configuration information, and mobility decision may be enhanced by an estimated performance gain of a candidate cell, e.g., whether the candidate cell is in the same or a different gNB than the source cell. In some embodiments, an Xn interface may be an Xn-C, e.g., control plane, interface.

In some other embodiments, served cell Information IE may contain information of cells, sent from each DU to a CU-CP, via an F1 interface, in an F1 setup request and/or an F1 setup response and/or gNB-DU configuration update at cell setup and/or configuration update on a DU. The IE may be updated by adding the proposed L1 cell configuration parameters, e.g., via an F1-C interface. At cell setup, the DU may send the L1 cell configuration parameters, e.g., via the F1-C interface, to the CU-CP, and update the L1 cell configuration parameters when the configuration changes.

In one embodiment, served cell Information IE is included in Xn setup and/or Xn response and/or NG-RAN node configuration update, and contains information about the cells, e.g., NR CGI and supported bands. The IE can be extended with the L1 cell configuration parameters for each cell hosted on that gNB. Then the L1 cell configuration parameters may be exchanged, e.g., via an Xn-C interface. Further, the L1 cell configuration parameters may be exchanged when an Xn relation is setup and/or when the L1 cell configuration changes.

In some other embodiments, L1 cell configuration parameters are used to estimate and compare the performance of different combinations of cells. In some other embodiments, "Capability Aware PCell Selection" may be used to compare combinations of cells (e.g., PCell+ SCell(s)). A nonlimiting example includes changing a PCell to another gNB and adding an SCell in that gNB and/or changing a PCell to another gNB and adding an SCell in the current gNB.

In one embodiment, a gNBCUCPFunction feature may be related to the CU-CP features described in the present disclosure. The gNBCUCPFunction feature may be a representation in a Management Object Model (MOM) (e.g., used for configuration of a network) of the CU-CP.

In another embodiment, parameters associated with the "Capability Aware PCell Selection" feature may be used for configuration by an operator on a high level (e.g., enabling the feature, setting RSRP level of measurement, etc.)

In some embodiments, the cell information is exchanged to configure measurements for at least a WD and/or trigger Hand Over (HO) to a cell (e.g., selecting targets based on L1 cell configuration parameters).

In one embodiment, where a handover from source cell to candidate cell must occur, e.g., the wireless device 22 is in a location too far for the source cell to serve the wireless device 22, comparing L1 performance gain between the source cell and the candidate cell may be optional. In another embodiment, if the wireless device 22 is associated with at least two candidate cells, at least one candidate cell may be selected for the wireless device 22 to connect to network node 16. The selection may be based on based on the L1 performance gain.

The following is a nonlimiting list of additional embodiments:
Embodiment A1. A first network node configured to communicate with a second network node, a third network node, and a fourth network node, the first network node configured to, and/or comprising a radio interface and/or a communication interface and/or comprising processing circuitry configured to:
   collect cell configuration parameters associated with a first configuration of any one of the first network node and the second network node; and
   distribute the cell configuration parameters to at least any one of the third network node and the fourth network node.
Embodiment A2. The first network node of Embodiment A1, wherein collecting cell configuration parameters includes updating with the cell configuration parameters a first group of information elements used in the first configuration of any one of the first network node and the second network node.
Embodiment A3. The first network node of any one of Embodiments A1-A2, wherein the first configuration includes anyone of an F1 setup request received by the first network node, an F1 setup response transmitted by the first network node, a gNB-DU configuration update received by the first network node, a gNB-DU configuration acknowledgment transmitted by the first network node, a subcarrier spacing, a subcarrier numerology, and a duplex scheme.
Embodiment A4. The first network node of any one of Embodiments A1-A3, wherein distributing the cell configuration parameters includes updating with the cell configuration parameters a second group of information elements used in a second configuration of any one of the third network node and the fourth network node.
Embodiment A5. The first network node of Embodiment A4, wherein the second configuration includes anyone of an Xn setup request received by the third network node, an Xn setup response transmitted by the third network node, an NG-RAN node configuration update received by the third network node, and an NG-RAN node configuration update acknowledgment transmitted by the third network node.
Embodiment A6. The first network node of any one of Embodiments A1-A5, wherein the cell configuration parameters are Layer 1 (L1) cell configuration parameters, the L1 cell configuration parameters being at least any one of a bandwidth parameter, a layer parameter including supported Multiple Inputs Multiple Outputs (MIMO) layers, and an order parameter including a supported modulation order.
Embodiment A7. The first network node of any one of Embodiments A1-A6, wherein the cell configuration parameters are further associated with a radio access technology network, the radio access technology network being a 5G NR network.
Embodiment A8. The first network node of any one of Embodiments A1-A7, wherein the first network node is any one of a Central Unit (CU) node and a Central Unit Control Plane (CU-CP) node, the second network node is Distributed Unit (DU) node, the third node is one NG-RAN node, and the fourth network node is another NG-RAN node.
Embodiment A9. The first network node of any one of Embodiments A1-A8, wherein the first network node and/or the radio interface and/or the processing circuitry is further configured to:
   estimate a performance metric of a group of cells associated with any one of the first network node the second network node; and
   compare another performance metric of another group of cells associated with any one of the third and fourth network nodes.
Embodiment B1. A method implemented in a first network node configured to communicate with a second network node, a third network node, and a fourth network node, the method comprising:
   collecting cell configuration parameters associated with a first configuration of any one of the first network node and the second network node; and
   distributing the cell configuration parameters to at least any one of the third network node and the fourth network node.
Embodiment B2. The method of Embodiment B1, wherein collecting cell configuration parameters includes updating with the cell configuration parameters a first group of information elements used in the first configuration of any one of the first network node and the second network node.
Embodiment B3. The method of any one of Embodiments B1-B2, wherein the first configuration includes anyone of an F1 setup request received by the first network node, an F1 setup response transmitted by the first network node, a gNB-DU configuration update received by the first network node, a gNB-DU configuration acknowledgment transmitted by the first network node, a subcarrier spacing, a subcarrier numerology, and a duplex scheme.
Embodiment B4. The method of any one of Embodiment B1-B3, wherein distributing the cell configuration parameters includes updating with the cell configuration parameters a second group of information elements used in a second configuration of any one of the third network node and the fourth network node.
Embodiment B5. The method of Embodiment B4, wherein the second configuration includes anyone of an Xn setup request received by the third network node, an Xn setup response transmitted by the third network node, an NG-RAN node configuration update received by the third network node, and an NG-RAN node configuration update acknowledgment transmitted by the third network node.
Embodiment B6. The method of any one of Embodiments B1-B5, wherein the cell configuration parameters are Layer 1 (L1) cell configuration parameters, the L1 cell configuration parameters being at least any one of a bandwidth parameter, a layer parameter including supported Multiple Inputs Multiple Outputs (MIMO) layers, and an order parameter including a supported modulation order.
Embodiment B7. The method of any one of Embodiments B1-B6, wherein the cell configuration parameters are further associated with a radio access technology network, the radio access technology network being a 5G NR network.
Embodiment B8. The method of any one of Embodiments B1-B7, wherein the first network node is any one of a Central Unit (CU) node and a Central Unit Control Plane (CU-CP) node, the second network node is Distributed Unit (DU) node, the third node is one NG-RAN node, and the fourth network node is another NG-RAN node.
Embodiment B9. The method of any one of Embodiments B1-B8, the method further including:
   estimating a performance metric of a group of cells associated with any one of the first network node the second network node; and
   comparing another performance metric of another group of cells associated with any one of the third and fourth network nodes.
Embodiment C1. A first gNB (gNB1), the first gNB (gNB1) comprising a first gNB-Central Unit (gNB1-CU) comprising a CU-Control Plane (CU-CP), the first gNB (gNB1) further comprising a first plurality of first gNB-Distributed Units (gNB1-DU1, gNB1-DU2), the first gNB (gNB1) configured to, and/or comprising a radio interface and/or a communication interface and/or comprising processing circuitry configured to:
   receive, at the CU-CP of the first gNB (gNB1), information indicative of Layer 1 (L1) configuration of at least two cells served by at least one of the first plurality of the first gNB-DUs (gNB1-DU1, gNB1-DU2); and
   make a WD mobility decision by taking into account at least a performance gain of candidate cells, the performance gain being estimated based on the received information indicative of L1 configuration.
Embodiment C2. The first gNB (gNB1) according to Embodiment C1, wherein the first gNB (gNB1) and/or the radio interface and/or the communication interface and/or processing circuitry is further configured to:
   receive, at the first gNB (gNB1) from a second gNB (gNB2), information indicative of Layer 1 (L1) configuration of at least one cell served by at least one gNB-DU (gNB2-DU1) of the second gNB (gNB2).
Embodiment C3. The first gNB (gNB1) according to Embodiment C1, wherein the information indicative of L1 configuration of the at least two cells served by at least one of the first plurality of the first gNB-DUs (gNB1-DU1, gNB1-DU2) is received over an F1 interface.
Embodiment C4. The first gNB (gNB1) according to Embodiment C2, wherein the information indicative of Layer 1 (L1) configuration of the at least one cell served by at least one of the second plurality of the second gNB-DUs (gNB2-DU1, gNB2-DU2) of the second gNB (gNB2) is received over an Xn interface.
Embodiment D1. A method implemented at a first gNB (gNB1), the first gNB (gNB1) comprising a first gNB-Central Unit (gNB1-CU) comprising a CU-Control Plane (CU-CP), the first gNB (gNB1) further comprising a first plurality of first gNB-Distributed Units (gNB1-DU1, gNB1-DU2), the method comprising:
   receiving, at the CU-CP of the first gNB (gNB1), information indicative of Layer 1 (L1) configuration of at least two cells served by at least one of the first plurality of the first gNB-DUs (gNB1-DU1, gNB1-DU2); and
   making a WD mobility decision by taking into account at least a performance gain of candidate cells, the performance gain being estimated based on the received information indicative of L1 configuration.
Embodiment D2. The method according to Embodiment D1, the method further including:
   receiving, at the first gNB (gNB1) from a second gNB (gNB2), information indicative of Layer 1 (L1) configuration of at least one cell served by at least one gNB-DU (gNB2-DU1) of the second gNB (gNB2).
Embodiment D3. The method according to Embodiment D1, wherein the information indicative of L1 configuration of the at least two cells served by at least one of the first plurality of the first gNB-DUs (gNB1-DU1, gNB1-DU2) is received over an F1 interface.
Embodiment D4. The method according to Embodiment D2, wherein the information indicative of Layer 1 (L1) configuration of the at least one cell served by at least one of the second plurality of the second gNB-DUs (gNB2-DU1, gNB2-DU2) of the second gNB (gNB2) is received over an Xn interface.

Appendix 1 including additional description of the methods, apparatuses, and systems described in the present disclosure is provided as part of the present disclosure.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:
1x RTT CDMA2000 1x Radio Transmission Technology
3GPP 3rd Generation Partnership Project
5G 5th Generation
5GC Fifth Generation Core
5GS Fifth Generation System
ABS Almost Blank Subframe
AC Application Client
AF Application Function
AMF Access and Mobility Function
AN Access Network
AP Access Point
ARQ Automatic Repeat Request
ASIC Application Specific Integrated Circuit
AUSF Authentication Server Function
AWGN Additive White Gaussian Noise
BCCH Broadcast Control Channel
BCH Broadcast Channel
CA Carrier Aggregation
CC Carrier Component
CCCH SDU Common Control Channel SDU
CDMA Code Division Multiplexing Access
CE Coverage enhancement
CGI Cell Global Identifier
CIR Channel Impulse Response
CN Core Network
CP Cyclic Prefix
CPICH Common Pilot Channel
CPICH Ec/No CPICH Received energy per chip divided by the power density in the band
CPU Central Processing Unit
CQI Channel Quality information
C-RNTI Cell RNTI
CSI Channel State Information
DCCHDedicated Control Channel
DL Downlink
DM Demodulation
DMRSDemodulation Reference Signal
DN Data Network
DNAI Data Network Access Identifier
DRX Discontinuous Reception
DSP Digital Signal Processor
DTCH Dedicated Traffic Channel
DTX Discontinuous Transmission
DUT Device Under Test
EAS Edge Application Server
ECGI Evolved CGI
E-CID Enhanced Cell-ID (positioning method)
ECS Edge Configuration Server
EDN Edge Data Network
EEC Edge Enabler Client
EES Edge Enabler Server
eNB Enhanced or Evolved Node B
ePDCCH enhanced Physical Downlink Control Channel
EPS Evolved Packet System
E-SMLC evolved Serving Mobile Location Center
E-UTRA Evolved Universal Terrestrial Radio Access
E-UTRAN Evolved Universal Terrestrial Radio Access Network
FDD Frequency Division Duplex
FFS For Further Study
FPGA Field Programmable Gate Array
GERAN GSM EDGE Radio Access Network
gNB New Radio Base Station
gNB-DU New Radio Base Station Distributed Unit
GNSS Global Navigation Satellite System
GSM Global System for Mobile communication
HARQHybrid Automatic Repeat Request
HO Handover
HRPD High Rate Packet Data
HSPA High Speed Packet Access
HSS Home Subscriber Server
IoT Internet of Things
IP Internet Protocol
LADNLocal Area Data Network
LOS Line of Sight
LPP LTE Positioning Protocol
LTE Long-Term Evolution
MAC Medium Access Control
MBMS Multimedia Broadcast Multicast Services
MBSFN Multimedia Broadcast multicast service Single Frequency Network
MBSFN ABS MBSFN Almost Blank Subframe
MDT Minimization of Drive Tests
MIB Master Information Block
MME Mobility Management Entity
MSC Mobile Switching Center
MTC Machine Type Communication
NEF Network Exposure Function
NF Network Function
NG-RAN Next Generation Radio Access Network
NPDCCH Narrowband Physical Downlink Control Channel
NR New Radio
NRF Network Function Repository Function
NSSF Network Slice Selection Function
O&M Operation and Maintenance
OCNGOFDMA Channel Noise Generator
OEM Original Equipment Manufacture
OFDM Orthogonal Frequency Division Multiplexing
OFDMA Orthogonal Frequency Division Multiple Access
OSS Operations Support System
OTDOA Observed Time Difference of Arrival
OTT Over-the-Top
PBCH Physical Broadcast Channel
PC Personal Computer
P-CCPCH Primary Common Control Physical Channel
PCell Primary Cell
PCF Policy Control Function
PCFICH Physical Control Format Indicator Channel
PDCCH Physical Downlink Control Channel
PDP Profile Delay Profile
PDSCH Physical Downlink Shared Channel
PGW Packet Data Network Gateway
PHICH Physical Hybrid-ARQ Indicator Channel
PLMNPublic Land Mobile Network
PMI Precoder Matrix Indicator
PRACH Physical Random Access Channel
PRS Positioning Reference Signal
PSS Primary Synchronization Signal
PUCCH Physical Uplink Control Channel
PUSCH Physical Uplink Shared Channel
QAM Quadrature Amplitude Modulation
QoS Quality of Service
RACHRandom Access Channel
RAM Random Access Memory
RAN Radio Access Network
RAT Radio Access Technology
RLM Radio Link Management
RNC Radio Network Controller
RNTI Radio Network Temporary Identifier
ROM Read Only Memory
RRC Radio Resource Control
RRH Remote Radio Head
RRM Radio Resource Management
RS Reference Signal
RSCP Received Signal Code Power
RSRP Reference Symbol Received Power OR Reference Signal Received Power
RSRQ Reference Signal Received Quality OR Reference Symbol Received Quality
RSSI Received Signal Strength Indicator
RSTD Reference Signal Time Difference
RTT Round Trip Time
SCEF Service Capability Exposure Function
SCell Secondary Cell
SCH Synchronization Channel
SCS/AS Services Capability Server / Application Server
SDU Service Data Unit
S-EAS Source Edge Application Server
S-EES Source Edge Enabler Server
SFN System Frame Number
SGW Serving Gateway
SI System Information
SIB System Information Block
SMF Session Management Function
SNR Signal to Noise Ratio
SON Self Optimized Network
SS Synchronization Signal
SSS Secondary Synchronization Signal
TCI Transmission Configuration Indicator
TDD Time Division Duplex
TDOA Time Difference of Arrival
T-EASTarget Edge Application Server
T-EES Target Edge Enabler Server
TOA Time of Arrival
TRP Transmission/Reception Point
TSS Tertiary Synchronization Signal
TTI Transmission Time Interval
UDM Unified Data Management
UE User Equipment
UL Uplink
ULCL Uplink Classifier
UMTS Universal Mobile Telecommunication System
UP User Plane
UPF User Plane Function
USIM Universal Subscriber Identity Module
UTDOA Uplink Time Difference of Arrival
UTRA Universal Terrestrial Radio Access
UTRAN Universal Terrestrial Radio Access Network
V2X Vehicle to everything
WCDMA Wide CDMA
WLAN Wide Local Area Network

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented in a first network node (16), the first network node (16) being a first Next Generation Node B, gNB, the method comprising:
configuring measurements for a Wireless Device, WD, for targets selected based on Layer 1, L1, cell configuration parameters, the L1 cell configuration parameters including at least one of a bandwidth parameter, a layer parameter including supported Multiple Inputs Multiple Outputs, MIMO, layers, an order parameter including a supported modulation order, a subcarrier spacing, a subcarrier numerology, and a duplex scheme, wherein the targets comprise a combination of a Primary Cell, PCell, and Secondary Cells, SCells.

2. The method of Claim 1, wherein the L1 cell configuration parameters further include at least one of a number of Non-Zero Power, NZP, Channel State Information, CSI, Reference Signal, RS, Ports, and a number of Tracking Reference Signal, TRS, Resource sets.

3. The method of Claim 1 or 2, wherein the first network node (16) comprises a first gNB Central Unit Control Plane, gNB-CU-CP (76), and a first plurality of gNB-Distributed Units, gNB-DUs (78), and wherein the L1 cell configuration parameters are received at the gNB-CU-CP (76) from at least one gNB-DU (78) of the first plurality of gNB-DUs (78).

4. The method of Claim 3, wherein the L1 cell configuration parameters are received over an F1 interface (77).

5. The method of any one of Claims 1-4, wherein the method further comprises:
receiving, from a second network node (16), L1 cell configuration parameters of at least one cell served by the second network node (16), the second network node (16) being a second gNB, the at least one cell served by the second network node (16) being included in the targets.

6. The method of Claim 5, wherein the L1 cell configuration parameters from the second network node (16) are received via an Xn interface (61).

7. The method of any one of Claims 1-6, wherein the method further comprises:
triggering a Hand Over, HO, to one of the targets based on the configured measurements.

8. A first network node (16), the first network node (16) being a first Next Generation Node B, gNB, the first network node (16) comprising processing circuitry (68) configured to:
configure measurements for a Wireless Device, WD, for targets selected based on Layer 1, L1, cell configuration parameters, the L1 cell configuration parameters including at least one of a bandwidth parameter, a layer parameter including supported Multiple Inputs Multiple Outputs, MIMO, layers, an order parameter including a supported modulation order, a subcarrier spacing, a subcarrier numerology, and a duplex scheme, wherein the targets comprise a combination of a Primary Cell, PCell, and Secondary Cells, SCells.

9. The first network node (16) of Claim 8, wherein the L1 cell configuration parameters further include at least one of a number of Non-Zero Power, NZP, Channel State Information, CSI, Reference Signal, RS, Ports, and a number of Tracking Reference Signal, TRS, Resource sets.

10. The first network node (16) of Claim 8 or 9, wherein the first network node (16) comprises a first gNB Central Unit Control Plane, gNB-CU-CP (76), and a first plurality of gNB-Distributed Units, gNB-DUs (78), and wherein the processing circuitry (68) is configured to receive the L1 cell configuration parameters at the gNB-CU-CP (76) from at least one gNB-DU (78) of the first plurality of gNB-DUs (78).

11. The first network node (16) of Claim 10, wherein the processing circuitry (68) is configured to receive the L1 cell configuration parameters over an F1 interface (77).

12. The first network node (16) of any one of Claims 8-11, wherein the processing circuitry (68) is further configured to:
receive, from a second network node (16), L1 cell configuration parameters of at least one cell served by the second network node (16), the second network node (16) being a second gNB, the at least one cell served by the second network node (16) being included in the targets.

13. The first network node (16) of Claim 12, wherein the first network node (16) comprises a communication interface (60), the communication interface (60) being an Xn interface (61) configured to receive the L1 cell configuration parameters from the second network node (16).

14. The first network node (16) of any one of Claims 8-13, wherein the processing circuitry (68) is further configured to:
trigger a Hand Over, HO, to one of the targets based on the configured measurements.

15. A computer program comprising instructions which, when executed on at least one processor, cause the at least one processor to carry out the method according to any one of Claims 1-7.
